Europäisches Patentamt

European Patent Office

Office européen des brevets

(11) Veröffentlichungsnummer: **0 469 371 A1**

# (12) EUROPÄISCHE PATENTANMELDUNG

(21) Anmeldenummer: **91111797.6**

(22) Anmeldetag: **15.07.91**

(51) Int. Cl.5: **E06B 3/96**, F16C 11/10

(30) Priorität: **30.07.90 AT 1592/90**

(43) Veröffentlichungstag der Anmeldung:
**05.02.92 Patentblatt 92/06**

(84) Benannte Vertragsstaaten:
**AT BE CH DE ES FR GB IT LI NL**

(71) Anmelder: **Austria Metall Aktiengesellschaft**

**A-5282 Braunau am Inn(AT)**

(72) Erfinder: **Knauseder, Kurt**
**Kugelberg 15**
**A-5222 Pfaffstätt(AT)**

(74) Vertreter: **WILHELMS, KILIAN & PARTNER**
**Patentanwälte**
**Eduard-Schmid-Strasse 2**
**W-8000 München 90(DE)**

(54) **Eckwinkel zum Einsetzen in Hohlprofilleisten für Rahmen von Fenstern, Türen, Fassadenteilen und dergleichen.**

(57) Eckwinkel zum Einsetzen in Hohlprofilleisten für Rahmen von Fenstern, Türen, Fassadenteilen und dergleichen, der zwei gegeneinander einstellbare und fixierbare Schenkel beinhaltet, die jeweils in die Hohlprofile eingreifen und an diesen fixiert sind, wobei die Schenkel jeweils ein zylindrisches, zur Eckwinkelschwenkachse (3) konzentrisches Segment (4, 5) besitzen, die an ihren miteinander kooperierenden Flächen ineinandergreifende Verzahnungen aufweisen und in der Eckwinkelschwenkachse (3) ein Anker (10) angeordnet ist, der mit der Rückseite des näher zur Eckwinkelschwenkachse (3) liegenden Segmentes (5) kooperiert, daß an diesem Anker (10) normal zur Eckwinkelschwenkachse (3) ein Spannglied (11) mit einem seiner Enden angeordnet ist, das durch Ausnehmungen (6, 7) der Segmente (4, 5) ragt und an seinem anderen herausragenden Ende einen breiteren, an der Rückseite des äußeren Segmentes (4) anliegenden Teil aufweist.

Fig.1

Die Erfindung bezieht sich auf Eckwinkel zum Einsetzen in Hohlprofilleisten für Rahmen von Fenstern, Türen, Fassadenteilen und dergleichen, der zwei gegeneinander einstellbare und fixierbare Schenkel beinhaltet, die jeweils in die Hohlprofile eingreifen und an diesen fixiert sind, wobei die Schenkel jeweils ein zylindrisches, zur Eckwinkelschwenkachse konzentrisches Segment besitzen, die an ihren miteinander kooperierenden Flächen ineinandergreifende Verzahnungen aufweisen.

Für die Herstellung von Rahmenkonstruktionen in Bauwesen, wie Fassadenverkleidungen, Glasvorbauten, Veranden, werden Eckverbinder zwischen Trägerholmen benötigt, bei denen der Winkel einstellbar ist. Dies ist deswegen notwendig, da die Toleranzen im Bauwesen so groß sind, daß vorgefertigte Winkelkonstruktionen nicht verwendbar sind. Daher werden vorort die Winkel der Rahmenteile eingestellt und dann diese Eckwinkel in der gewünschten Stellung fixiert.

Es wurden in neuerer Zeit Eckwinkel verwendet, bei denen das Eckgelenk aus zwei Segmenten besteht, die ineinandergleiten und an den beiden kooperierenden Flächen Profilierungen oder Verzahnungen aufweisen. Die Fixierung erfolgt durch eine Schraube, die durch einen Fortsatz im Bereich des Gelenkes eines Schenkels geschraubt wird und so die beiden Segmente gegeneinander drückt, wodurch die Fixierung des Winkels erfolgt.

Nachteilig an dieser Bauweise ist, daß die Krafteinleitung dieser Schraube nur an einem Punkt in das näher zur Winkelschwenkachse befindliche Segment erfolgt. Dadurch kommt es zu starken Deformationen an dieser Stelle. Diese können auch nach der Montage weitergehen, wodurch es zu einer späteren Lösung des fixierten Gelenkes kommt. Dies ist vor allem bei kriechfähigen Materialien der Fall. Es kann sich zusätzlich auch noch der Fortsatz verformen, was ebenfalls zu einer Lösung der Fixierung führt. Die Bauweise ist aufwendig, da ein Schenkel sowohl ein Segment, als auch einen Fortsatz aufzuweisen hat.

Es ist daher erfindungsgemäß wünschenswert, eine Ausführung zu schaffen, bei der der Kraftfluß besser in den einstellbaren Eckwinkel bzw. in die beiden miteinander kooperierenden Segmente erfolgt und eine sicherere Verbindung und Arretierung erzielt wird. Außerdem soll die Form der Schenkel einfach sein.

Dies erfolgt erfindungsgemäß derart, daß in der Eckwinkelschwenkachse ein Anker angeordnet ist, der mit der Rückseite des näher zur Eckwinkelschwenkachse liegenden Segmentes kooperiert, daß an diesem Anker normal zur Eckwinkelschwenkachse ein Spannglied mit einem seiner Enden angeordnet ist, das durch Ausnehmungen der Segmente ragt und an seinem anderen herausragenden Ende einen breiteren, an der Rückseite des äußeren Segmentes anliegenden Teil aufweist.

Bei dieser Bauweise ist kein Fortsatz nötig, in dem die Arretierschraube angeordnet ist. Die Krafteinleitung erfolgt auf der einen Seite durch den Anker auf das innere Segment und auf der anderen Seite durch das äußere Segment, das über eine beliebig große Fläche, welche unabhängig von der Dimensionierung der Spanngliederung ist, an der Rückseite des äußeren Segmentes anliegen kann.

Das Spannglied kann je nach Wunsch ein zylindrischer Bolzen sein, der mit einem Ende am Anker verschraubt und an seinem anderen Ende einen Schraubkopf aufweist. Diese Bauform ist besonders leicht zu montieren. Die Auflagefläche des Schraubkopfes kann, wenn gewünscht, durch Unterlegscheiben noch zusätzlich vergrößert werden. Dadurch, daß der Anker über die gesamte Drehachse des Eckwinkels ausbildbar ist und er flächig mit der Rückseite der näher zur Eckwinkelschwenkachse kooperiert, ist eine gute Krafteinleitung in die beiden Segmente erzielbar.

Der Eckwinkel kann auch so ausgeführt werden, daß das aus den Segmenten herausragende Ende des Spanngliedes eine Querbohrung aufweist, in der ein beidseitig überragender Spannkeil angeordnet ist.

Diese Bauweise eignet sich besonders bei größeren Ausführungsformen von Eckwinkeln und benötigt als Montagegerät lediglich einen Hammer, mit dem der Spannkeil in die Querbohrung eingeschlagen wird.

Es ist auch günstig, daß der Anker und das Spannglied gemeinsam ein T-förmiges Glied bilden. Dadurch sind zur Montage weniger Teile nötig. Das Zusammenspannen kann in diesem Fall ebenfalls durch Mutter oder Keil erfolgen.

Die Erfindung wird anhand der nachstehenden Zeichnungen beschrieben. Es zeigen:

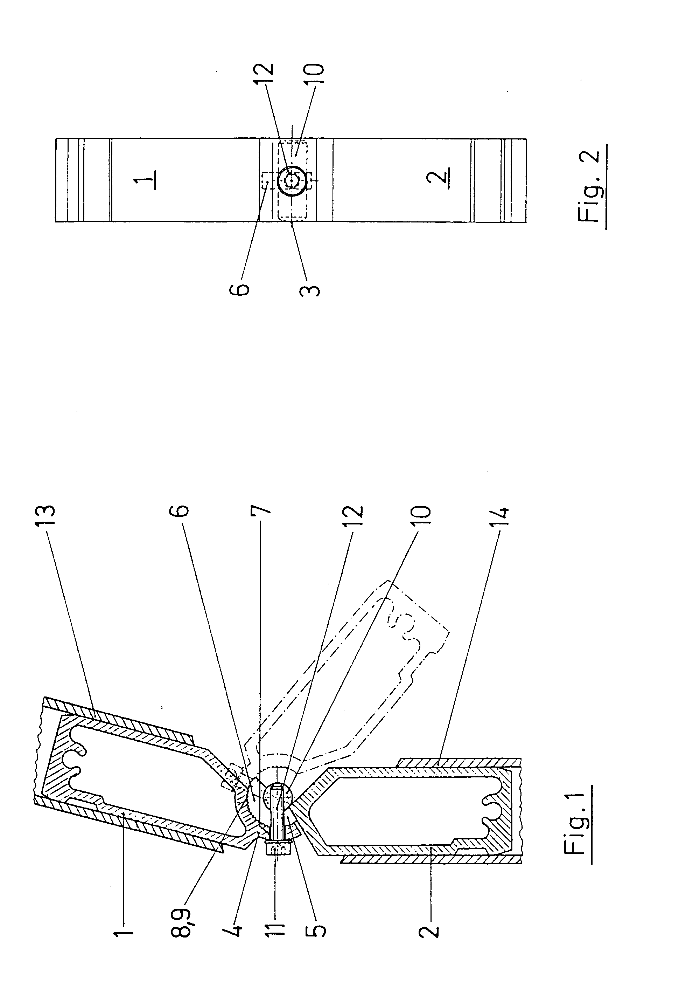

Fig. 1    einen Schnitt normal zur Schwenkachse des Eckwinkels.

Fig. 2    eine Projektion des Eckwinkels auf eine Ebene parallel zur Schwenkachse.

Der Eckwinkel besteht aus den beiden Schenkeln 1 und 2. Die beiden Schenkeln 1, 2 besitzen jeweils zylindrische, zur Eckwinkelschwenkachse 3 konzentrische Segmente 4, 5, die an ihren miteinander kooperierenden Flächen ineinandergreifende Verzahnungen 8, 9 aufweist. Konzentrisch zur Eckwinkelschwenkachse 3 ist ein Anker 10 angeordnet, der flächig die Rückseite des Segmentes 5 berührt. In ihm ist das Spannglied 11 angeordnet. In dem gezeigten Beispiel ist das Spannglied 11 als Zylinderschraube ausgeführt, bei der der Kopf 12 gegen die Rückseite des Segmentes 4 drückt und somit die beiden Segmente 4, 5 zueinanderspannt. Die beiden Segmente 4, 5 weisen Ausnehmungen 6, 7 aus, durch welche das Spannglied 11 verläuft.

Das Spannglied 11 ist mittels Gewinde 12 im Anker 10 verschraubt. Die strichpunktierte Darstellung des Schenkels 1 zeigt die maximale Winkelstellung des Eckwinkels an. Die beiden Schenkel 1, 2 sind als Strangpreßhohlprofile ausgeführt und greifen mit ihren jeweils, den Segmenten 4 bzw. 5 gegenüberliegenden Enden in die Rahmenprofile 13, 14 ein.

**Patentansprüche**

1. Eckwinkel zum Einsetzen in Hohlprofilleisten für Rahmen von Fenstern, Türen, Fassadenteilen und dergleichen, der zwei gegeneinander einstellbare und fixierbare Schenkel beinhaltet, die jeweils in die Hohlprofile eingreifen und an diesen fixiert sind, wobei die Schenkel jeweils ein zylindrisches, zur Eckwinkelschwenkachse konzentrisches Segment besitzen, die an ihren miteinander kooperierenden Flächen ineinandergreifende Verzahnungen aufweisen, dadurch gekennzeichnet, daß in der Eckwinkelschwenkachse (3) ein Anker (10) angeordnet ist, der mit der Rückseite des näher zur Eckwinkelschwenkachse (3) liegenden Segmentes (5) kooperiert, daß an diesem Anker (10) normal zur Eckwinkelschwenkachse (3) ein Spannglied (11) mit einem seiner Enden angeordnet ist, das durch Ausnehmungen (6, 7) der Segmente (4, 5) ragt und an seinem anderen herausragenden Ende einen breiteren, an der Rückseite des äußeren Segmentes (4) anliegenden Teil aufweist.

2. Eckwinkel nach Anspruch 1, dadurch gekennzeichnet, daß das Spannglied (11) ein zylindrischer Bolzen ist, der mit einem Ende im Anker (10) verschraubt ist und an seinem anderen Ende einen Schraubkopf (12) aufweist.

3. Eckwinkel nach Anspruch 1, dadurch gekennzeichnet, daß das aus den Segmenten (4, 5) herausragende Ende des Spanngliedes (11) eine Querbohrung aufweist, in der ein beidseitig überragender Spannkeil angeordnet ist.

4. Eckwinkel nach einem der vorhergehenden Ansprüche, dadurch gekennzeichnet, daß Anker (10) und Spannglied (11) gemeinsam ein T-förmiges Glied bilden.

Fig. 2

Fig. 1

**Europäisches Patentamt**

# EUROPÄISCHER RECHERCHENBERICHT

Nummer der Anmeldung

**EP 91 11 1797**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | LU-A-57 462 (VEREINIGTE LEICHTMETALL-WERKE) <br> * Seite 2, Absatz 6 - Seite 3, Absatz 3; Abbildungen * * <br> – – – | 1,4 | E 06 B 3/96 <br> F 16 C 11/10 |
| Y | US-A-1 999 219 (TONEY) <br> * Seite 1, linke Spalte, Zeile 21 - rechte Spalte, Zeile 32; Abbildungen * * <br> – – – | 1,4 | |
| A | DE-U-8 802 109 (HARTMANN & CO) <br> * Seite 4, Zeile 14 - Seite 5, Zeile 20; Abbildungen * * <br> – – – | 1 | |
| A | US-A-1 721 596 (HIMMEL ET AL) <br> * Seite 1, Zeile 24 - Zeile 55; Abbildungen * * <br> – – – | 2 | |
| A | US-A-1 799 115 (NAISULER ET AL) <br> * Seite 2, Zeile 72 - Zeile 129; Abbildungen * * <br> – – – – – | 3 | |

| | RECHERCHIERTE SACHGEBIETE (Int. Cl.5) |
|---|---|
| | E 06 B <br> E 05 D <br> F 16 C |

Der vorliegende Recherchenbericht wurde für alle Patentansprüche erstellt

| Recherchenort | Abschlußdatum der Recherche | Prüfer |
|---|---|---|
| Den Haag | 18 Oktober 91 | DEPOORTER F. |